# EUROPÄISCHE PATENTSCHRIFT

(11) **EP 1 079 226 B1**
(45) Veröffentlichungstag und Bekanntmachung des Hinweises auf die Patenterteilung: **14.04.2004**
(21) Anmeldenummer: 99116534.1
(22) Anmeldetag: 24.08.1999
(51) Int. Cl.: G01N 21/55

(54) **Vorrichtung zur Durchführung von Immunoassays**
Apparatus for performing immunoassays
Dispositif de dosage immunologique

(43) Veröffentlichungstag der Anmeldung: 28.02.2001
(73) Patentinhaber: Leuze electronic GmbH + Co KG, 73277 Owen/Teck (DE); STIFTUNG FÜR DIAGNOSTISCHE FORSCHUNG, CH-1785 Cressier sur Morat (CH)
(72) Erfinder: Quapil, Gerald, Dr., 73277 Owen/Teck (DE); Schawaller, Manfred, Dr., 1785 Cressier / Au Village (CH)
(74) Vertreter: Ruckh, Rainer Gerhard, Dr.

(56) Entgegenhaltungen:
- EP-A- 0 411 907
- WO-A-95/22754
- US-A- 3 939 350

## Beschreibung

Die Erfindung betrifft eine Vorrichtung zur Untersuchung von Immunoassays.

Die medizinische Diagnostik, im speziellen die immunologische Diagnostik, basiert zu einem großen Anteil auf dem ELISA (Enzyme-Linked-Immunosorbent-Assay). Eine neuere Übersicht über Immunoassays findet sich bei Hage, Anal Chem 1999 71, 294R-304R. Zwei Merkmale zeichnen einen ELISA aus: Ein erster Reaktionspartner ist mit einem Enzym markiert und in einem Assay-Medium gelöst. Ein zweiter Reaktionspartner ist an einer Festphase gebunden, wobei die Festphase von einer Grenzfläche eines das Assay-Medium begrenzenden Festkörpers gebildet ist.

Als Festphase kommen dabei meistens standardisierte Kunststoffplatten, häufig Polystyrol, mit 96 Vertiefungen (=Wells) zur Anwendung. Die Oberfläche der Kunststoff Wells bindet Proteine, welche die zweiten Reaktionspartner bilden, im Nanogrammbereich durch Adsorption, was eine für immunologische Nachweise ausreichende Menge ist. Eine Bindungsreaktion mit dem in Lösung vorliegenden enzymmarkierten ersten Reaktionspartner führt zur Bindung des Enzyms an die Festphase. Das gebundene Enzym wird sichtbar gemacht durch die Zugabe eines chromogenen Substrats das spezifisch ist für dieses Enzym. Anschließend kann das entstehende farbige Produkt optisch ausgewertet werden.

Für die Markierung des ersten Reaktionspartners, meistens ein Immunglobulin, mit Enzym gibt es eine Reihe von technischen Möglichkeiten, gängige Markierungen sind Peroxidase oder alkalische Phosphatase.

ELISA's ergeben sehr gute Ergebnisse hinsichtlich Sensitivität und Spezifität, die erreichbaren Nachweisgrenzen liegen im Nanogrammbereich oder darunter. Es gibt die verschiedensten Ausführungsformen von Assays, die auf diesem Prinzip beruhen. Dabei werden je nach Fragestellung Antigene oder Antikörper nachgewiesen.

Ein wesentlicher Nachteil des ELISA ist jedoch die Handhabung des Tests, weil nacheinander verschiedene Reagentien zu den Wells zugegeben und wieder entfernt werden müssen. Die Summe der verschiedenen Pipettier-, Wasch-, und Inkubationsschritte variiert von Assay zu Assay und kann zehn oder mehr betragen. Deshalb sind ELISA's zeit- und arbeitsaufwendig in der Durchführung. Um gute Ergebnisse zu erhalten müssen ELISA's von speziell ausgebildetem Personal mit großer Sorgfalt durchgeführt werden.

Ein weiterer Nachteil des ELISA ist die Zeitdauer für einen Assay, der durch die Summe der Inkubations- und Waschschritte gegeben ist und normalerweise eine bis mehrere Stunden dauert.

Aus der US 3,939,350 ist eine Vorrichtung zur Untersuchung von Immuno-Assays bekannt, bei welcher eine transparente Scheibe zwischen ein Prisma und einen Behälter mit dem Assay-Medium einbringbar ist.

Mittels eines Lasers werden Sendelichtstrahlen im Winkel der Totalreflexion auf die Scheibe geführt, wodurch im Grenzbereich des Assay-Mediums im Bereich der Scheibe ein evaneszentes Feld erzeugt wird.

Der erste Reaktionspartner in Lösung ist mit einem Luminophor markiert. Der zweite Reaktionspartner ist an die Oberfläche der Scheibe gebunden. Bindet der Luminophor markierte Reaktionspartner aus der Lösung an den Reaktionspartner an der Oberfläche, so kann er dann durch das evaneszente Feld eines total reflektierten Lichtstrahls angeregt werden und Fluoreszenzstrahlung emittieren. Diese Fluoreszenzstrahlung wird quantitativ bestimmt und ist direkt proportional zu gebundenem luminophormarkierten Reaktionspartner und damit direkt proportional zu der Menge des ursprünglich vorhandenen Reaktionspartners in der Lösung.

Da nur der an die Oberfläche gebundene Luminophor im Evaneszenzfeld des Laserstrahl liegt, wird nur dieser gebundene Luminophor optimal angeregt und emittiert Photonen. Nicht gebundener Fluorophor in der Lösung ist nicht im Evaneszenzfeld des Lichtstrahls positioniert, wird deshalb nicht angeregt und emittiert auch keine Photonen. Diese Anordnung erlaubt also die quantitative Bestimmung von gebundenem Fluorophor in Anwesenheit von nichtgebundenem Fluorophor.

Nachteilig hierbei ist jedoch der mechanisch komplizierte Aufbau der Vorrichtung. Insbesondere das Präparieren der Scheibe und das anschließende Einbringen der Scheibe zwischen Prisma und Behälter ist äußerst zeitaufwenig. Zudem kann die Präparation nur von qualifiziertem Personal durchgeführt werden.

Aus der EP 0 411 907 A2 ist eine optische Sensor- und Reflektoranordnung für die Untersuchung von Immuno-Assay-Systemen bekannt. Mittels eines optischen Sensors wird polarisiertes Licht generiert und über Reflektoren und Umlenkspiegel einem Behälter mit Immunoassays zugeführt. Mittels eines Photodetektors wird das am Behälter total reflektierte Licht detektiert. Dabei ist die Rückstreuung des Lichts vom Brechungsindex des Behälterinhalts und damit von dem evaneszentren Feld, das durch Liganden im Immuno-Assay generiert wird, abhängig.

Die WO 95/22754 A1 betrifft eine weitere Vorrichtung zur Analyse von Immuno-Assays. Die Vorrichtung umfasst ein Analysegefäß zur Aufnahme des Immuno-Assays. Auf dem Boden des Analysegefäß wird eine Schicht eingebracht, die vorzugsweise aus einem Gold-Film besteht. Eine Lichtquelle sendet Lichtstrahlen zum Bodenbereich des Analysegefäßes. Von dort total reflektiertes Licht wird in einem Detektor registriert.

Bei Lichteinstrahlung in die Schicht wird dort ein freies Elektronen-Plasma erzeugt. Durch dieses Plasma wird als Resonanzeffekt bei Lichteinstrahlung in einem vorgegebenen Winkel kein Licht von der Schicht zurückreflektiert. In dem Reaktionsvolumen des Analysegefäßes, in welchem die zu analysierenden Moleküle enthalten sind, wird ein evaneszentes Feld aufgebaut. Dieses evaneszente Feld beeinflusst den Resonanzeffekt, so dass das SPR Signal, d. h. das Ausbleiben eines Reflex-Lichtstrahls bei Einstrahlen von Licht auf die Schicht bei einem verschobenen Einfallswinkel des Lichts erhalten wird.

Die nachveröffentlichte WO 01/14859 A1 betrifft ein Verfahren zur Bestimmung von Substanzen, welches folgende Schritte umfasst:
- Bereitstellen einer Oberfläche, welche mindestens einen Reaktionspartner R¹ für einen Reaktionspartner R² an der Oberfläche gebunden umfasst,
- Kontaktieren der Oberfläche mit einer Lösung, welche mindestens die zu bestimmende Substanz, mindestens eine Fluorophor-haltige Verbindung und mindestens einen Farbstoff, welcher im Absorptions- und / oder Emissionsbereich des Fluorophors absorbiert, umfasst, worin sich an dem Reaktionspartner R¹ auf der Oberfläche mittels des Reaktionspartners R² ein Komplex ausbildet und worin dieser Komplex neben dem Reaktionspartner R¹ mindestens die zu bestimmenden Substanz und die mindestens eine Fluorophor-haltige Verbindung umfasst, und
- Anregen des auf der Oberfläche gebundenen Fluorophors durch das Evaneszenzfeld einer Lichtquelle und Messen der erzeugten Fluoreszenz.

Zur Durchführung dieses Verfahrens wird eine einzelne Küvette oder Mikrofilterplatte eingesetzt.

Der Erfindung liegt die Aufgabe zugrunde eine Vorrichtung der eingangs genannten Art so auszubilden, dass eine Untersuchung von Immuno-Assays bei hoher Nachweisempfindlichkeit mit geringem Zeit-, Kosten- und Materialaufwand durchführbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Anordnung ist einfach und kostengünstig herstellbar. Zudem ist vorteilhaft, dass bei dieser keine bewegten Teile benötigt werden, wodurch der Justageaufwand gering gehalten wird.

Die Untersuchung von Immunoassays kann in einer geringen Anzahl von Arbeitsschritten durchgeführt werden. Insbesondere ist nahezu kein Aufwand für die Präparation der Assays nötig.

Weiterhin ist vorteilhaft, dass die erfindungsgemäße Vorrichtung wenig Einzelteile umfasst, einen geringen Montageaufwand erfordert und zudem klein von den Abmessungen ist und ein geringes Gewicht aufweist, so dass diese einfach handhabbar und insbesondere auch mobil ausgebildet sein kann.

Die Erfindung wird im nachstehenden anhand der Zeichnungen erläutert. Es zeigen
- Figur 1:: Schematische Darstellung eines ersten Ausführungsbeispiels einer Vorrichtung zur Untersuchung von Immunoassays mit einer Küvette zur Aufnahme eines Assay-Mediums. Dieses Ausführungsbeispiel ist nicht Teil der Erfindung.
- Figur 2:: Querschnitt durch die Küvette gemäß Figur 1.
- Figur 3:: Draufsicht auf die Küvette gemäß Figur 1
- Figur 4:: Teildarstellung eines zweiten Ausführungsbeispiels zur Untersuchung von Immunoassays. Dieses Ausführungsbeispiel ist auch nicht Teil der Erfindung.
- Figur 5:: Schematische Darstellung eines dritten Ausführungsbeispiels zur Untersuchung von Immunoassays mit einer ersten Mehrfachanordnung von Küvetten.
- Figur 6:: Querschnitt durch einen Teil der Vorrichtung gemäß Figur 5.
- Figur 7:: Schematische Darstellung eines dritten Ausführungsbeispiels zur Untersuchung von Immunoassays mit einer zweiten Mehrfachanordnung von Küvetten.
- Figur 8:: Querschnitt durch die Vorrichtung gemäß Figur 7.

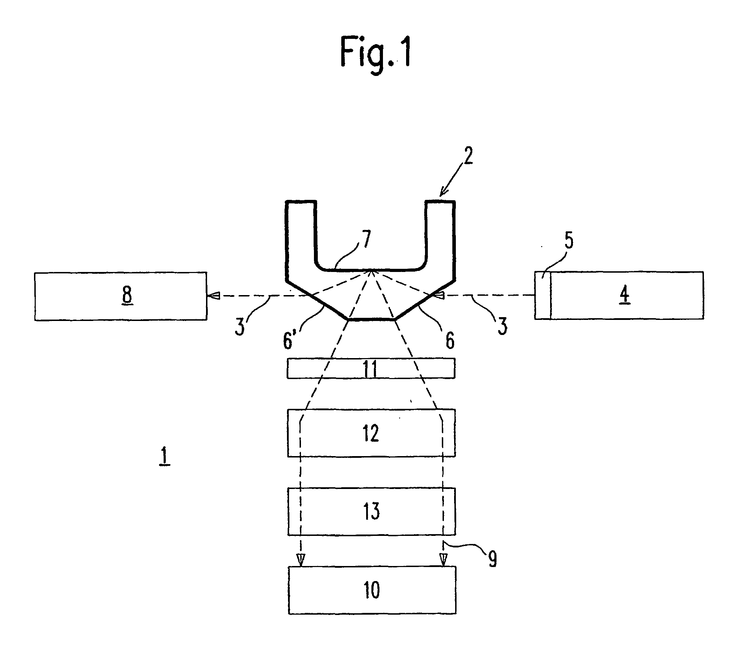

Figur 1 zeigt ein erstes Ausführungsbeispiel einer Vorrichtung 1 zur Untersuchung von Immunoassays.

Das zu untersuchende Immunoassay befindet sich in einer Küvette 2. Zur Untersuchung des Assays ist eine optische Sensoranordnung vorgesehen. Die Sensoranordnung umfasst einen Sendelichtstrahlen 3 emittierenden Sender 4, der von einem Laser gebildet ist. Dem Sender 4 ist ein Polarisationsfilter 5 nachgeordnet, so dass die auf die Küvette 2 gerichteten Sendelichtstrahlen 3 linear polarisiert sind.

Der Sender 4 ist vor einer abgeschrägten Seitenwand 6 des Bodens der Küvette 2 angeordnet. Die Neigung dieser Seitenwand 6 ist so gewählt, dass die dort auftreffenden Sendelichtstrahlen 3 an der Seitenwand 6 durch Brechung auf die Oberseite des Bodens der Küvette 2 hin gebrochen werden und dort im Winkel der Totalreflexion auftreffen. Die Neigung der Seitenwand 6 ist zudem so gewählt, dass die Sendelichtstrahlen 3 im Brewster-Winkel auftreffen. Dadurch bleibt die Polarisation der Sendelichtstrahlen 3 bei Eintritt in die Küvette 2 erhalten. Zudem entstehen keine Intensitätsverluste. Die Oberseite des Bodens der Küvette 2 bildet eine Grenzfläche 7 zum Immunoassay. Dadurch wird nahezu die gesamte Lichtmenge der Sendelichtstrahlen 3 an der Oberseite des Bodens reflektiert und auf eine zweite Seitenwand 6¹ des Bodens der Küvette 2 geführt. An dieser Seitenwand 6¹ werden die Sendelichtstrahlen 3 nochmals gebrochen und treffen auf einen optischen Sumpf 8, der eine Rückreflexion der Sendelichtstrahlen 3 auf die Küvette 2 vermeidet. Die Strahlführung der Sendelichtstrahlen 3 ist so gewählt, dass diese außerhalb der Küvette 2 in horizontaler Richtung und parallel zur Oberseite des Bodens der Küvette 2 verlaufen.

Trotz der Totalreflexion der Sendelichtstrahlen 3 an der Grenzfläche 7 dringt ein exponentiell mit der Distanz zur Grenzfläche 7 abfallender kleiner Teil der Lichtmenge der Sendelichtstrahlen 3 in das Innere der Küvette 2 ein und bildet dort innerhalb einer Grenzschicht ein evaneszentes Feld. Die Eindringtiefe des evaneszenten Feldes ist dabei größer als die Rauhtiefe der Oberfläche der Küvette 2.

In der Küvette 2 befinden sich unter anderem Fluorophore. Die Fluorophore werden in der Grenzschicht optisch angeregt und emittieren Fluoreszenzstrahlen 9. Der den Boden der Küvette 2 durchsetzende Teil der Fluoreszenzstrahien 9 trifft auf einen Empfänger 10, der in Abstand unterhalb der Küvette 2 angeordnet ist. Der Empfänger 10 ist von einem PIN-Detektor, einem Photomultiplier oder einer Avalanche-Diode gebildet.

Zur Verbesserung der Nachweisempfindlichkeit sind dem Empfänger 10 ein Polarisationsfilter 11, eine Empfangsoptik 12 in Form einer Sammellinse und ein Interferenzfilter 13 vorgeordnet.

Der Empfänger 10 und der Sender 4 sind an eine gemeinsame, nicht dargestellte Auswerteeinheit angeschlossen, die von einem Microcontroller oder dergleichen gebildet ist. In der Auswerteeinheit erfolgt die Auswertung der am Ausgang des Empfängers 10 anstehenden Empfangssignale. Zudem erfolgt die Steuerung des Senders 4 über die Auswerteeinheit.

In der Küvette 2 befindet sich ein Assay-Medium, das typischerweise von einer wässrigen Lösung gebildet ist. In dem Assay-Medium befindet sich ein erster Reaktionspartner, der mittels der erfindungsgemäßen Vorrichtung 1 quantitativ nachgewiesen wird. Typischerweise ist der erste Reaktionspartner von Antigenen oder Antikörpern gebildet. Ein zweiter Reaktionspartner, der beispielsweise von einem Protein gebildet ist, ist an der Grenzfläche 7 der Küvette 2 durch Adsorption gebunden.

Der erste Reaktionspartner in Lösung ist mit dem Fluorophor markiert. Der zweite Reaktionspartner ist an die Grenzfläche 7 der Küvette 2 gebunden. Bindet der Fluorophor markierte erste Reaktionspartner aus der Lösung an den zweiten Reaktionspartner an der Oberfläche, so kann er dann durch das evaneszente Feld der totalreflektierten Sendelichtstrahlen 3 angeregt werden und Fluoreszenzstrahlen 9 emittieren. Diese Fluoreszenzstrahlen 9 werden im Empfänger 10 quantitativ bestimmt und sind direkt proportional zu dem gebundenen fluorophormarkierten Reaktionspartner und damit direkt proportional zu der Menge des ursprünglich vorhandenen ersten Reaktionspartners in der Lösung.

Da nur der an die Oberfläche gebundene Fiuorophor im Evaneszenzfeid der Sendelichtstrahlen 3 liegt, wird nur dieser gebundene Fluorophor angeregt und emittiert Fluoreszenzstrahlen 9. Nicht gebundener Fluorophor in der Lösung ist nicht im Evaneszenzfeld positioniert, wird deshalb nicht angeregt und emittiert auch keine Fluoreszenzstrahlen 9. Diese Anordnung erlaubt somit die quantitative Bestimmung von gebundenem Fluorophor in Anwesenheit von nichtgebundenem Fluorophor ohne einen vorhergehenden Separations- und Waschschritt.

Dabei wird zweckmäßigerweise nach Zugabe des ersten Reaktionspartners in die Küvette 2 die Zunahme des gebundenen Fluorophors mit zeitlich fortschreitender Reaktion direkt gemessen. Da die Menge gebundenen Fluorophors direkt proportional zur ursprünglich vorhandenen Menge Fluorophors ist, ermöglicht die Sensoranordnung die quantitative Bestimmung von in der Lösung befindlichem Reaktanten in Echtzeit ohne zusätzliche weitere Wasch- und/oder Pipettierschritte außer dem ersten Pipettierschritte.

Da die Absorptionskoeffizienten und Emissionseigenschaften für Fluorophore sehr günstig sind, ergeben sich geringe Nachweisgrenzen. Bereits nach einigen Minuten können Reaktionen gemessen und quantifiziert werden.

Bei der Auswertung der am Ausgang des Empfängers 10 anstehenden Empfangssignale wird vor Untersuchung des Immunoassays zunächst das Dunkelrauschen des Empfängers 10 und der in diesem integrierten Photonenzähleinheit emittiert. Dabei wird als Standardabweichung für das Dunkelrauschen die Quadratwurzel √N der registrierten Rate N der Photonen ermittelt.

Zum quantitativen Nachweis des ersten Reaktionspartners in der Küvette 2 muß dann das bei der Untersuchung des Immunoassays ansteigende Empfangssignal innerhalb einer bestimmten Messzeit ein Vielfaches dieser Standardabweichung erreichen. Gleichzeitig muss die Form des Anstiegs des Empfangssignals einer Exponentialfunktion mit einer Zeitkonstante innerhalb vorgegebener Toleranzgrenzen genügen. Die mathematisch angepassten Werte für die Zeitkonstante, die Amplitude und den Offset des Empfangssignals müssen innerhalb vorgegebener Grenzen liegen.

Schließlich darf die Summe der Abweichungen von Messwerten und der an diese angepassten mathematischen Kurve einen bestimmten Wert nicht überschreiten.

Entsprechend dem sich ändernden Inhalt der Küvette 2 können die vorgenannten Parameter variiert werden.

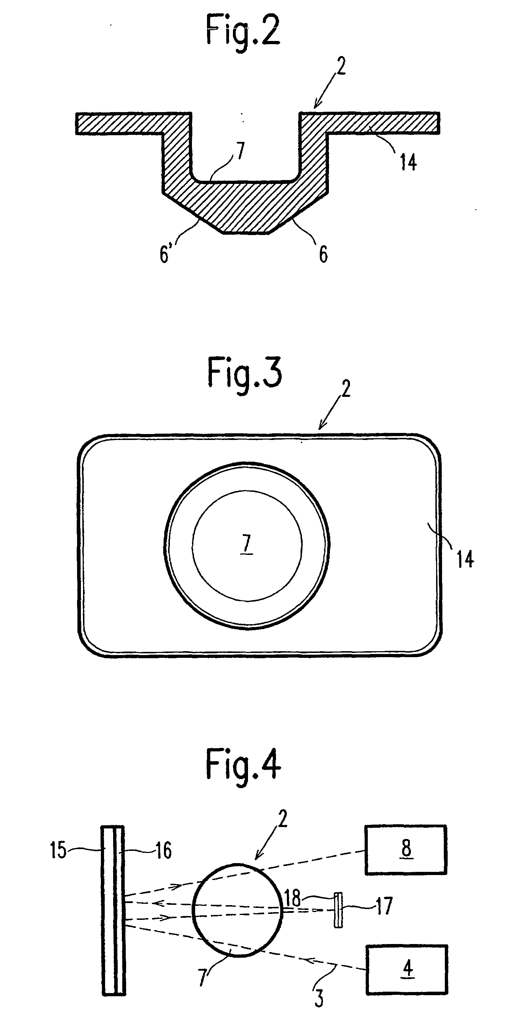

Der Aufbau der Küvette 2 ist aus Figur 1 sowie insbesondere aus den Figuren 2 und 3 ersichtlich. Die Küvette 2 weist im wesentlichen einen hohlzylindrischen Grundkörper auf und ist zur Oberseite hin offen.

Der Boden der Küvette 2 besteht aus einem massiven kreiszylindrischen Grundkörper, wobei die Mantelfläche an gegenüberliegender Seite abgeschrägt ist. Die dadurch entstehenden Seitenwände 6, 6¹ laufen in schrägem Winkel auf die ebene Unterseite des Bodens zu. Die ebenen Seitenwände 6, 6¹ sind spiegelsymmetrisch zum Grundkörper der Küvette 2 angeordnet. Die Neigungswinkel der Oberflächen der Seitenwände 6, 6¹ der Küvette 2 sind so angepasst, dass entsprechend des Berechnungsindexes des Küvettenmaterials und des in der Küvette 2 enthaltenen Assay-Mediums die wie in Figur 1 dargestellten, horizontal verlaufenden und auf eine Seitenwand 6 der Küvette 2 auftreffenden Sendelichtstrahlen 3 im Winkel der Totalreflexion in Richtung der Oberseite des Bodens der Küvette 2 abgelenkt werden, welche die Grenzfläche 7 bildet. Entsprechend werden dann die Sendelichtstrahlen 3 über die zweite Seitenwand 6¹ aus der Küvette 2 ausgekoppelt.

Die Küvette 2 weist einen Aufsatz 14 auf, der an den oberen Rand des hohlzylindrischen Grundkörpers anschließt. Der Aufsatz 14 ist scheibenförmig ausgebildet und weist im wesentlichen die Form einer Platte mit rechteckigem Querschnitt auf Die Küvette 2 wird zur Fixierung relativ zur Sensoranordnung am Aufsatz 14 an einer nicht dargestellten Halterung befestigt. Vorzugsweise ist die Küvette 2 an gegenüberliegenden seitlichen Rändern des Aufsatzes 14 gehalten. Die seitlichen Ränder oder die Oberseite des Aufsatzes 14 können zudem Markierungen zur Identifikation des Inhalts der Küvette 2 tragen. Die Markierungen können insbesondere von Barcodes gebildet sein.

Die Küvette 2 bestehend aus Grundkörper und Aufsatz 14 ist einstückig ausgebildet und besteht vorzugsweise aus einem Kunststoffspritzteil. Die Küvette 2 besteht dabei vorzugsweise aus Polystyrol.

Die offene Oberseite der Küvette 2 kann mit einer Folie oder dergleichen abgeschlossen werden. Dann kann beispielsweise mit einer Spritze durch die Folie das zu untersuchende Immunoassay in die Küvette 2 eingespritzt werden.

Bei der Anordnung gemäß Figur 1 werden die vom Sender 4 emittierten Sendelichtstrahlen 3 in die Küvette 2 eingekoppelt, dann nach einmaliger Totalreflexion an der Grenzfläche 7 der Küvette 2 aus dieser ausgekoppelt und schließlich dem optischen Sumpf 8 zugeführt. Nachteilig hierbei ist, dass aufgrund des kleinen Durchmessers der Sendelichtstrahlen 3, der typischerweise erheblich kleiner als die Größe der Grenzfläche 7 ist, nur ein kleiner Teil der in der Grenzschicht befindlichen Fluorophore optisch angeregt wird.

Um diesen Nachteil zu beheben kann die Anordnung gemäß Figur 4 vorgesehen werden. Bei dieser Anordnung werden die Sendelichtstrahlen 3 nach dem ersten Durchgang durch die Küvette 2 an einem ersten Spiegel 15 mit vorgeordnetem Polarisationsfilter 16 reflektiert und über die zweite Seitenwand 6¹ des Bodens wieder in die Küvette 2 so eingekoppelt, dass die Sendelichtstrahlen 3 im Winkel der Totalreflexion nochmals an der Grenzfläche 7 reflektiert werden. Die nach der Reflexion aus der Küvette 2 austretenden Sendelichtstrahlen 3 treffen dann auf einen zweiten Spiegel 17 mit vorgeordnetem Polarisationsfilter 18 und werden nochmals in die Küvette 2 eingekoppelt. Nach Totaireflexion an der Grenzfläche 7 treffen die Sendelichtstrahlen 3 nochmals auf den ersten Spiegel 15. Von dort werden die Sendelichtstrahlen 3 nochmals in die Küvette 2 eingekoppelt und treffen nach Totalreflexion an der Grenzfläche 7 auf den optischen Sumpf 8. Der Sender 4, die Spiegel 15, 17 sowie der optische Sumpf 8 sind im wesentlichen in einer Ebene, die durch den Küvettenboden verläuft, seitlich versetzt zueinander angeordnet, so dass bei den einzelnen Durchgängen durch die Küvette 2 die Sendelichtstrahlen 3 jeweils an unterschiedlichen Stellen auf die Grenzfläche 7 auftreffen. Dadurch wird ein erheblicher Teil der Grenzfläche 7 mittels der Sendelichtstrahlen 3 optisch angeregt.

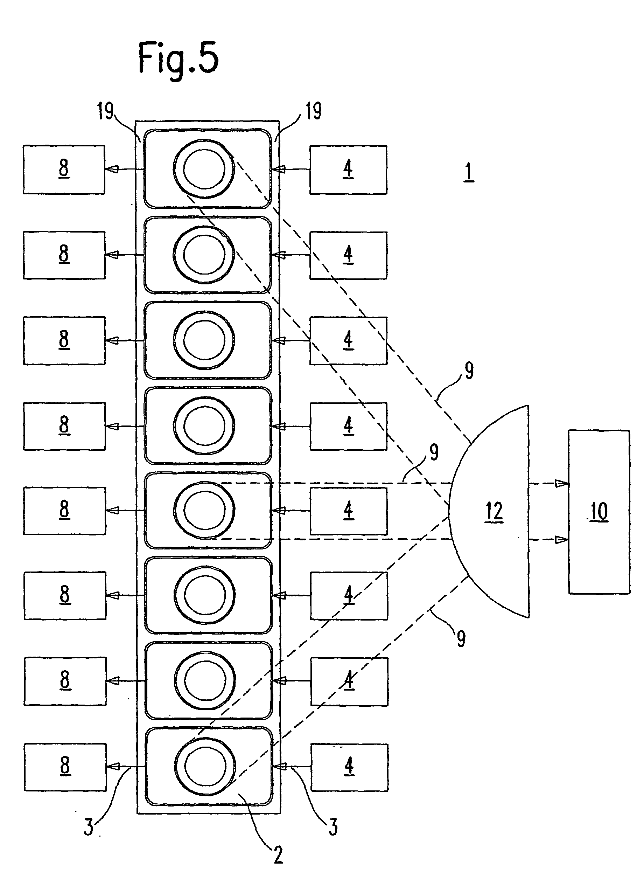

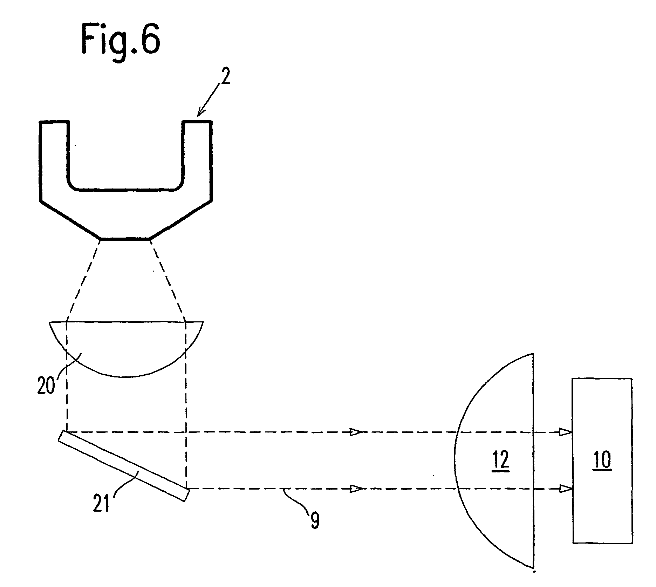

In den Figuren 5 und 6 ist eine Vorrichtung 1 mit einer Mehrfachanordnung von Küvetten 2 dargestellt. Dabei sind die Küvetten 2 in einer Linearanordnung hintereinander angeordnet und in einem Rahmen 19 gelagert, der die Halterung bildet. Jeder Küvette 2 ist jeweils ein Sender 4 und ein optischer Sumpf 8 zugeordnet.

Die an der Unterseite der Böden der Küvette 2 austretenden Fluoreszenzstrahlen 9 werden über die Empfangsoptik 12 zum Empfänger 10 geführt, wobei dem Empfänger 10 analog zu Figur 1 ein Interferenzfilter 13 und ein Polarisationsfilter 11 vorgeordnet sind, welche in den Figuren 5 und 6 der Übersichtlichkeit wegen nicht dargestellt sind.

Unterhalb jeder Küvette 2 ist eine Linse 20 und ein dieser nachgeordneter Umlenkspiegel 21 angeordnet. Mittels der Linse 20 werden die aus der Küvette 2 austretenden Sendelichtstrahlen 3 gesammelt und zum Umlenkspiegel 21 geführt. Die den einzelnen Küvetten 2 zugeordneten Umlenkspiegel 21 sind so orientiert, dass die daran reflektierten Fluoreszenzstrahlen 9 über die Empfangsoptik 12 auf den Empfänger 10 treffen. Der Übersichtlichkeit wegen sind nur die von drei Küvetten 2 ausgehenden Fluoreszenzstrahlen 9 in Figur 5 aufgetragen. Die von den restlichen Küvetten 2 ausgehenden Fluoreszenzstrahlen 9 sind dagegen nicht eingezeichnet.

Damit die aus den einzelnen Küvetten 2 austretenden Fluoreszenzstrahlen 9 separat ausgewertet werden können, werden über die Auswerteeinheit die Sender 4 einzeln nacheinander aktiviert.

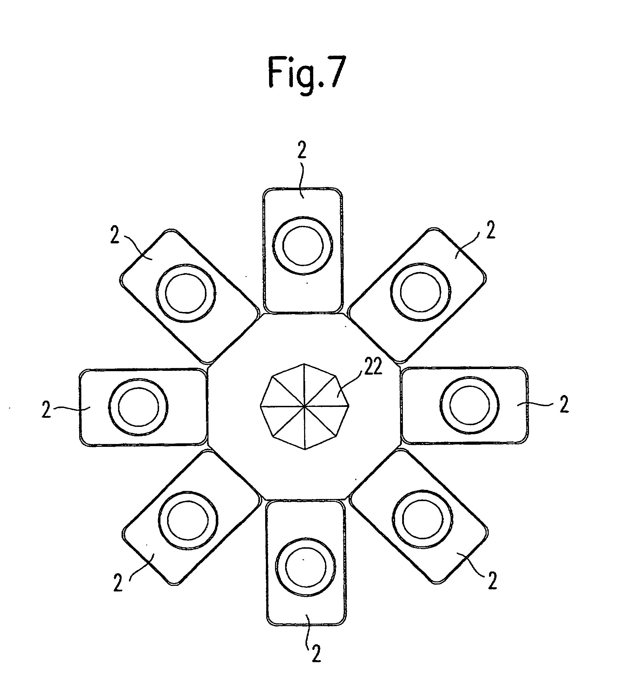

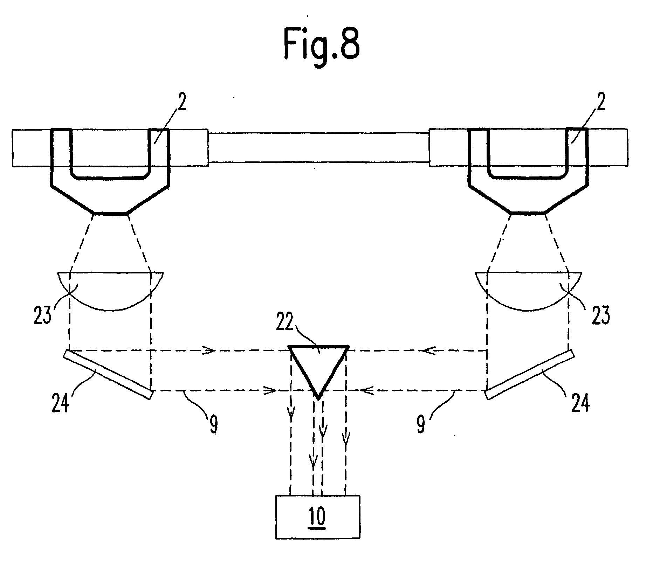

In den Figuren 7 und 8 ist eine Vorrichtung 1 mit einer weiteren Mehrfachanordnung von Küvetten 2 dargestellt. Figur 7 zeigt eine konzentrische Anordnung von Küvetten 2, wobei im Zentrum der Anordnung ein stationärer Polygonspiegel 22 angeordnet ist. Jeder Küvette 2 ist wiederum ein Sender 4 und ein optischer Sumpf 8 zugeordnet, die in den Figuren 7 und 8 nicht dargestellt sind. Die Küvetten 2 sind in einer nicht dargestellten Halterung gelagert. Die Sender 4 und die optischen Sümpfe 8 sind ebenfalls stationär in vorgegebenen Positionen zur jeweiligen Küvette 2 angeordnet.

Wie insbesondere aus Figur 8 ersichtlich ist, sind die Küvetten 2 in einer Ebene liegend angeordnet, während sich der Polygonspiegel 22 unterhalb der Küvetten 2 befindet.

Jeder Küvette 2 ist eine Linse 23 und ein Umlenkspiegel 24 zugeordnet, welche unterhalb des Bodens der jeweiligen Küvette 2 angeordnet sind. Die an der Unterseite des Bodens einer jeden Küvette 2 austretenden Fluoreszenzstrahlen 9 werden mittels der Linse 23 gesammelt und auf den Umlenkspiegel 24 geführt. Die dort reflektierten Fluoreszenzstrahlen 9 werden am Polygonspiegel 22 abgelenkt und zu dem unterhalb des Polygonspiegels 22 angeordneten Empfängers 10 geführt. Die dem Empfänger 10 vorgeordnete Empfangsoptik 12 sowie der Polarisationsfilter 11 und Interferenzfilter 13 sind in Figur 8 nicht dargestellt.

Damit die aus den einzelnen Küvetten 2 austretenden Fluoreszenzstrahlen 9 separat ausgewertet werden können, werden die Sender 4 wiederum einzeln nacheinander aktiviert.

## Patentansprüche

1. Vorrichtung (1) zur Untersuchung von Immunoassays mit einem flüssigen Assay-Medium, mit einer Mehrfachanordnung von Küvetten (2) zur Aufnahme des Assay-Mediums, wobei erste Reaktionspartner in dem Assay-Medium gelöst und mit einem Fluorophor markiert sind, und zweite Reaktionspartner innerhalb einer Grenzschicht an einer Grenzfläche (7) jeweils einer Küvette (2) gebunden sind, welche Grenzfläche von der Oberseite des Bodens jeweils einer Küvette (2) gebildet ist, und mit einer Mehrfachanordnung von einzeln nacheinander aktivierten Sendern (4), wobei jeweils von einem Sender (4) emittierte Sendelichtstrahlen (3) so auf eine Küvette (2) gerichtet sind, dass die Sendelichtstrahlen (3) über eine Seitenwand (6) des Bodens eingekoppelt sind, so dass diese im Boden verlaufend im Winkel der Totalreflexion auf die Grenzfläche (7) geführt sind, wodurch in der Grenzschicht ein Evaneszenzfeld generiert wird, durch welches an die zweiten Reaktionspartner gebundene fluorophormarkierten ersten Reaktionspartner optisch angeregt werden und Fluoreszenzstrahlen emittieren, und mit einem Empfänger, in welchem zum quantitativen Nachweis des ersten Reaktionspartners die aus den einzelnen Küvetten austretenden Fluoreszenzstrahlen registriert werden.

2. Vorrichtung nach Anspruch 1, **dadurch gekennzeichnet, dass** der Boden jeder Küvette (2) zwei gegenüberliegende, in einem Winkel kleiner als 90° zur Grenzfläche (7) verlaufende ebene Seitenwände (6, 6¹) aufweist, wobei die Sendelichtstrahlen (3) über eine erste Seitenwand (6) in den Boden eingekoppelt und nach Totalreflexion an der Grenzfläche (7) über die zweite Seitenwand (6') ausgekoppelt sind.

3. Vorrichtung nach Anspruch 2, **dadurch gekennzeichnet, dass** die Seitenwände (6, 6¹) des Bodens jeder Küvette (2) symmetrisch zu deren Symmetrieebene verlaufen.

4. Vorrichtung nach einem der Ansprüche 2 oder 3, **dadurch gekennzeichnet, dass** jede Küvette (2) eine im wesentlichen hohlzylindrische Form aufweist, wobei die ebenen Seitenwände (6, 6¹) als Abschrägungen des kreiszylindrischen Bodens der Küvette (2) ausgebildet sind.

5. Vorrichtung nach einem der Ansprüche 1 - 4, **dadurch gekennzeichnet, dass** jede Küvette (2) an ihrer Oberseite offen ist und einen an ihrem oberen Rand anschließenden scheibenförmigen Aufsatz (14) aufweist, der in eine Halterung einsetzbar ist.

6. Vorrichtung nach Anspruch 5, **dadurch gekennzeichnet, dass** der Aufsatz (14) einen rechteckigen Querschnitt aufweist, an dessen Längsseiten die Halterung befestigbar ist.

7. Vorrichtung nach einem der Ansprüche 4 oder 6, **dadurch gekennzeichnet, dass** an einem seitlichen Rand des Aufsatzes (14) eine Markierung zur Kennzeichnung des Inhalts jeder Küvette (2) vorgesehen ist.

8. Vorrichtung nach einem der Ansprüche 1 - 7, **dadurch gekennzeichnet, dass** jede Küvette (2) einstückig ausgebildet ist.

9. Vorrichtung nach Anspruch 8, **dadurch gekennzeichnet, dass** jede Küvette (2) aus einem Kunststoffspritzteil besteht.

10. Vorrichtung nach Anspruch 9, **dadurch gekennzeichnet, dass** jede Küvette (2) aus Polystyrol besteht.

11. Vorrichtung nach einem der Ansprüche 1 - 10, **dadurch gekennzeichnet, dass** die Sendelichtstrahlen (3) ausserhalb einer Küvette (2) parallel zur Grenzfläche (7) der Küvette (2) verlaufen.

12. Vorrichtung nach einem der Ansprüche 1 - 11, **dadurch gekennzeichnet, dass** die Fluoreszenzstrahlen (9) über die Unterseite des Bodens jeder Küvette (2) ausgekoppelt und auf den Empfänger (10) geführt sind.

13. Vorrichtung nach einem der Ansprüche 1 - 12, **dadurch gekennzeichnet dass** jeweils ein Sender (4) vor einer Seitenwand (6) des Bodens einer Küvette (2) angeordnet ist, und dass die Sendelichtstrahlen (3) nach Austritt aus der Küvette (2) auf einen optischen Sumpf (8) geführt sind.

14. Vorrichtung nach einem der Ansprüche 1 - 13, **dadurch gekennzeichnet, dass** jeder Sender (4) von einem Laser gebildet ist, welchem ein Polarisationsfilter (5) nachgeordnet ist

15. Vorrichtung nach einem der Ansprüche 13 oder 14, **dadurch gekennzeichnet, dass** mittels einer Anordnung von Spiegeln (15, 17) mit vorgeordneten Polarisationsfiltern (16, 18) die Sendelichtstrahlen (3) jeweils eines Senders (4) mehrfach durch den Boden einer Küvette (2) zur Grenzfläche (7) geführt sind.

16. Vorrichtung nach einem der Ansprüche 1 - 15, **dadurch gekennzeichnet, dass** der Empfänger (10) von einem Photomultipler, einem PIN-Detektor oder einer Avalanche-Diode gebildet ist, welchem ein Polarisationsfilter (11), eine Empfangsoptik (12) und ein Interferenzfilter (13) vorgeordnet sind.

17. Vorrichtung nach einem der Ansprüche 1 - 16, **dadurch gekennzeichnet, dass** eine Linearanordnung von Küvetten (2) vorgesehen ist.

18. Vorrichtung nach einem der Ansprüche 1 - 16, **dadurch gekennzeichnet, dass** die Küvetten (2) der Mehrfachanordnung konzentrisch zu einem Polygonspiegel (22) angeordnet sind, wobei die an den Küvetten (2) austretenden Fluoreszenzstrahlen (9) über den Polygonspiegel (22) zum Empfänger (10) geführt sind.

## Claims

1. Device (1) for testing immunoassays by a liquid assay medium, with a multiple arrangement of cuvettes (2) for receiving the assay medium, wherein first reaction partners are dissolved in the assay medium and marked by a fluorophore and second reaction partners within a boundary layer are bonded to a boundary surface (7) of each cuvette (2), which boundary surface is formed by the upper side of the base of each cuvette (2), and with a multiple arrangement of transmitters (4) which are individually activated in succession, wherein transmitted light beams (3) emitted by each transmitter (4) are so directed onto a cuvette (2) that the transmitted light beams (3) are coupled in by way of a side wall (6) of the base so that these are guided, extending at the angle of total reflection, in the base onto the boundary surface (7), wherein there is generated in the boundary layer an evanescent field by which fluorophore-marked first reaction partners bonded to the second reaction partners are optically excited and emit fluorescent beams, and with a receiver in which the fluorescent beams issuing from the individual cuvettes are registered for quantitative detection of the first reaction partner.

2. Device according to claim 1, **characterised in that** the base of each cuvette (2) comprises two mutually opposite flat side walls (6, 6') extending at an angle relative to the boundary surface (7) of less than 90°, wherein the transmitted light beams (3) are coupled into the base by way of a first side wall (6) and after total reflection at the boundary surface (7) are coupled out by way of the second side wall (6').

3. Device according to claim 2, **characterised in that** the side walls (6, 6') of the base of each cuvette (2) extend symmetrically to the plane of symmetry thereof.

4. Device according to one of claims 2 and 3, **characterised in that** each cuvette (2) has a substantially hollow-cylindrical shape, wherein the flat side walls (6, 6') are formed as chamfers of the circularly cylindrical base of the cuvette (2).

5. Device according to one of claims 1 to 4, **characterised in that** each cuvette (2) is open at the upper side thereof and has a disc-shaped top part (14), which is connected with its upper edge and is insertable into a holder.

6. Device according to claim 5, **characterised in that** the top part (14) has a rectangular cross-section, the holder being fastenable to the longitudinal sides thereof.

7. Device according to one of claims 4 and 6, **characterised in that** a marking for characterisation of the content of each cuvette (2) is provided at a lateral edge of the top part (14).

8. Device according to one of claims 1 to 7, **characterised in that** each cuvette (2) is of integral construction.

9. Device according to claim 8, **characterised in that** each cuvette (2) consists of an injection-moulded plastics material member.

10. Device according to claim 9, **characterised in that** each cuvette (2) consists of polystyrol.

11. Device according to one of claims 1 to 10, **characterised in that** the transmitted light beams (3) extend outside a cuvette (2) parallelly to the boundary surface (7) of the cuvette (2).

12. Device according to one of claims 1 to 11, **characterised in that** the fluorescent beams (9) are coupled out by way of the underside of the base of each cuvette (2) and led to the receiver (10).

13. Device according to one of claims 1 to 12, **characterised in that** a respective transmitter (4) is arranged in front of a side wall (6) of the base of a cuvette (2) and that the transmitted light beams (3) after exit from the cuvette (2) are led to an optical sump (8).

14. Device according to one of claims 1 to 13, **characterised in that** each transmitter (4) is formed by a laser, downstream of which a polarisation filter (5) is arranged.

15. Device according to one of claims 13 and 14, **characterised in that** the transmitted light beams (3) of each transmitter (4) are guided multiply through the base of a cuvette (2) to the boundary surface (7) by means of an arrangement of mirrors (15, 17) with upstream polarisation filters (16, 18).

16. Device according to one of claims 1 to 15, **characterised in that** the receiver (10) is formed by a photomultiplier, a PIN detector or an avalanche diode, upstream of which are arranged a polarisation filter (11), a receiving optical system (12) and an interference filter (13).

17. Device according to one of claims 1 to 16, **characterised in that** a linear arrangement of cuvettes (2) is provided.

18. Device according to one of claims 1 to 16, **characterised in that** the cuvettes (2) of the multiple arrangement are arranged concentrically to a polygon reflector (22), wherein the fluorescent beams (9) exiting the cuvettes (2) are led by way of the polygon reflector (22) to the receiver (10).

## Revendications

1. Dispositif (1) d'analyse de dosages immunologiques avec un milieu de dosage liquide, comportant une disposition multiple de cuvettes (2) destinées à recevoir le milieu de dosage, où des premiers partenaires de réaction sont dissous dans le milieu de dosage et sont marqués avec un fluorophore, et où des seconds partenaires de réaction sont liés au sein d'une couche limite ou frontière au niveau d'une surface limite (7) respectivement d'une cuvette (2), laquelle surface limite ou frontière est formée de la face supérieure du fond d'une cuvette (2) respective, et comportant une disposition multiple d'émetteurs (4) séparés activés les uns après les autres, des rayons lumineux d'émission (3) respectivement émis par un émetteur (4) étant orientés sur une cuvette (2) de façon telle que les rayons lumineux d'émission (3) sont couplés en entrée via ou par l'intermédiaire d'une paroi latérale (6) du fond, de façon à être dirigés dans le fond en se propageant selon un angle de la réflexion totale sur la surface limite (7), suite à quoi est généré dans la couche limite ou frontière un champ d'évanescence par lequel les premiers partenaires de réaction marqués par un fluorophore et liés aux seconds partenaires de réaction sont excités optiquement et émettent des rayons de fluorescence, et comportant un récepteur dans lequel on enregistre les rayons de fluorescence sortant des différentes cuvettes isolées pour effectuer une détection quantitative du premier partenaire de réaction.

2. Dispositif selon la revendication 1, **caractérisé en ce que** le fond de chaque cuvette (2) présente deux parois latérales (6, 6') planes opposées, s'étendant selon un angle inférieur à 90° par rapport à la surface limite (7), les rayons lumineux d'émission (3) étant couplés en entrée par une première paroi latérale (6) dans le fond et, après réflexion totale au niveau de la surface limite (7), étant couplés en sortie par l'intermédiaire de, ou via la seconde paroi latérale (6').

3. Dispositif selon la revendication 2, **caractérisé en ce que** les parois latérales (6, 6') du fond de chaque cuvette (2) s'étendent symétriquement par rapport à leur plan de symétrie.

4. Dispositif selon l'une des revendications 2 ou 3, **caractérisé en ce que** chaque cuvette (2) présente une forme essentiellement cylindrique creuse, les parois latérales planes (6, 6') étant conçues en tant que chanfrein du fond cylindrique circulaire de la cuvette (2).

5. Dispositif selon l'une des revendications 1 à 4, **caractérisé en ce que** chaque cuvette (2) est ouverte au niveau de sa face supérieure et présente un prolongement (14) en forme de disque qui se raccorde au niveau de son bord supérieur, lequel peut être inséré dans un support.

6. Dispositif selon la revendication 5, **caractérisé en ce que** le prolongement (14) présente une section rectangulaire sur les côtés longitudinaux de laquellepeut être fixé le support.

7. Dispositif selon l'une des revendications 4 ou 6, **caractérisé en ce qu'**au niveau d'un bord latéral du prolongement (14) est prévue une marque permettant d'identifier le contenu de chaque cuvette (2).

8. Dispositif selon l'une des revendications 1 à 7, **caractérisé en ce que** chaque cuvette (2) est réalisée en une pièce.

9. Dispositif selon la revendication 8, **caractérisé en ce que** chaque cuvette (2) se compose d'une pièce plastique moulée par injection.

10. Dispositif selon la revendication 9, **caractérisé en ce que** chaque cuvette (2) est réalisée en polystyrène.

11. Dispositif selon l'une des revendications 1 à 10, **caractérisé en ce que** les rayons lumineux d'émission (3) se propagent à l'extérieur d'une cuvette (2) parallèlement à la surface limite (7) de la cuvette (2).

12. Dispositif selon l'une des revendications 1 à 11, **caractérisé en ce que** les rayons de fluorescence (9) sont couplés en sortie par l'intermédiaire de, ou via la face inférieure du fond de chaque cuvette (2) et sont dirigés sur le récepteur (10).

13. Dispositif selon l'une des revendications 1 à 12, **caractérisé en ce que** respectivement un émetteur (4) est disposé avant une paroi latérale (6) du fond d'une cuvette (2) et **en ce que** les rayons lumineux d'émission (3) sont dirigés après la sortie de la cuvette (2) sur un piège ou puits optique (8).

14. Dispositif selon l'une des revendications 1 à 13, **caractérisé en ce que** chaque émetteur (4) est formé par un laser auquel est coordonné un filtre de polarisation (5) monté en aval.

15. Dispositif selon l'une des revendications 13 ou 14, **caractérisé en ce qu'**au moyen d'une disposition de miroirs (15, 17) avec filtres de polarisation (16, 18) prévus en amont, les rayons lumineux d'émission (3) d'un émetteur respectif (4) sont dirigés plusieurs fois à travers le fond d'une cuvette (2) vers la surface limite (7).

16. Dispositif selon l'une des revendications 1 à 15, **caractérisé en ce que** le récepteur (10) est formé d'un photomultiplicateur, d'un détecteur PIN ou d'une diode avalanche, devant lequel est disposé un filtre de polarisation (11), un dispositif optique de réception (12) et un filtre d'interférence (13).

17. Dispositif selon l'une des revendications 1 à 16, **caractérisé en ce qu'**est prévue une disposition linéaire des cuvettes (2).

18. Dispositif selon l'une des revendications 1 à 16, **caractérisé en ce que** les cuvettes (2) de la disposition multiple sont disposées de façon concentrique par rapport à un miroir polygonal (22), les rayons de fluorescence (9) sortant des cuvettes (2) étant dirigés par l'intermédiaire du ou via le miroir polygonal (22) vers le récepteur (10).
